# FASCICULE DE BREVET EUROPEEN

(11) **EP 2 929 161 B1**
(45) Date de publication et mention de la délivrance du brevet: **02.10.2019**
(21) Numéro de dépôt: 13815041.2
(22) Date de dépôt: 04.12.2013
(51) Int. Cl.: F02C 6/12, F01D 5/34, F04D 29/44, F04D 29/28, F04D 29/22, F04D 17/10, F04D 1/00

(54) **COMPRESSEUR CENTRIFUGE DE GAZ OU POMPE COMPORTANT UNE COURONNE ET UNE CARÉNAGE**
RADIALVERDICHTER EINER GASTURBINE ODER PUMPE WELCHER EINEN KRANZ UND EINEN DECKRING BEINHALTET
CENTRIFUGAL COMPRESSOR OF A GAS TURBINE OR A PUMP COMPRISING A RIM AND A SHROUD

(30) Priorité: 04.12.2012 FR 1261612
(43) Date de publication de la demande: 14.10.2015
(73) Titulaire: Thy Engineering, 62620 Ruitz (FR); Liebherr-Aerospace Toulouse SAS, 31200 Toulouse (FR)
(72) Inventeur: AUBIN, Stéphan, 34090 Montpellier (FR); CIAIS, Viviane, 31200 Toulouse (FR); ROUMEAS, Mathieu, 31330 Ondes (FR)
(74) Mandataire: Novagraaf Technologies
(86) Numéro de dépôt international: PCT/FR2013/052934
(87) Numéro de publication internationale: WO 2014/096604

(56) Documents cités:
- EP-A2- 2 525 101
- WO-A2-2011/087662
- WO-A2-2011/087662
- WO-A2-2012/061545
- WO-A2-2012/061545
- DE-A1- 2 304 043
- DE-A1- 2 304 043
- DE-A1- 10 226 696
- DE-A1- 10 226 696
- DE-U1-202012 004 682
- DE-U1-202012 004 682
- US-A1- 2007 059 179
- US-A1- 2010 196 163

## Description

### Domaine technique

La présente invention se rapporte à une machine tournante telle qu'un compresseur du type centrifuge pour un fluide gazeux ou une pompe pour un liquide. Elle concerne en particulier le système de diffusion d'une telle machine.

### Etat de la technique

Les machines tournantes telles qu'un compresseur de type centrifuge ou une pompe sont largement utilisées dans l'industrie, en particulier dans le domaine des moteurs thermiques. En particulier, on utilise une turbine accouplée sur le même arbre à un compresseur pour former un turbocompresseur. La turbine est alimentée par les gaz d'échappement d'un moteur et entraîne le compresseur qui comprime de l'air frais pour la suralimentation du moteur. Certains compresseurs sont entraînés par un moteur électrique.

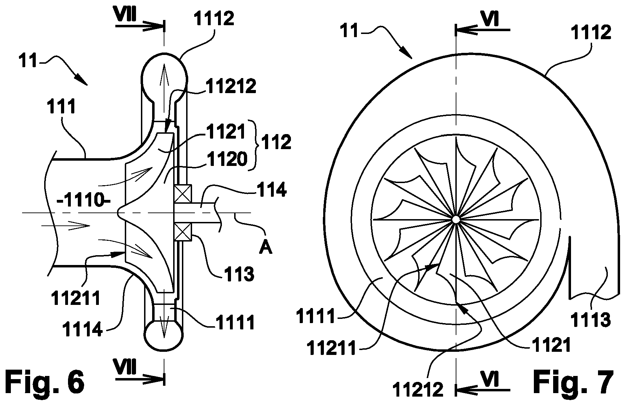

Les figures 6 et 7 montrent un compresseur 11 centrifuge selon l'art antérieur. Le compresseur 11 comporte un corps de compresseur 111 et une partie tournante montée rotative dans le corps de compresseur 111 autour d'un axe de roue A. La partie tournante comporte une roue de compresseur 112 montée sur un arbre 114 rotatif dans un palier 113 du corps de compresseur 111. La roue de compresseur 112 comporte un moyeu 1120 et un ensemble de pales 1121 fixées sur le moyeu. Le corps de compresseur 111 comporte en outre une ouverture axiale placée en regard du moyeu 1120 et qui constitue une conduite d'entrée 1110. Le corps de compresseur 111 comporte une volute 1112 autour de la roue de compresseur 112. La volute 1112 comporte une ouverture périphérique placée en périphérie de la roue de compresseur 112 et débouche par une conduite de sortie 1113 qui s'étend sensiblement dans une direction tangentielle à la roue de compresseur 112. L'ouverture périphérique est appelée un diffuseur 1111. Les pales 1121 comportent un premier bord 11211, appelé bord d'attaque, en regard de l'ouverture axiale 1110 et un deuxième bord 11212, appelé bord de fuite, en regard du diffuseur 1111 pour que les gaz circulent de l'ouverture axiale 1110 au diffuseur 1111 en étant entraînés par la roue de compresseur 112. La géométrie des pales 1121 est étudiée pour que les gaz reçoivent de l'énergie mécanique par la roue de compresseur 112, ceci principalement en étant accélérés, l'énergie cinétique ainsi obtenue étant ensuite convertie sous forme de pression dans la volute. Le document EP 2 525 101 A2 divulgue un exemple d'un compresseur centrifuge de gaz de l'art antérieur.

Certaines versions de roues de compresseur sont carénées et comportent à cet effet un carénage fixé sur les pales et dont la section épouse celle de la paroi de guidage.

Des machines du même type peuvent être utilisées pour un fluide non plus gazeux, mais liquide. Dans ce cas, on utilise le terme de pompe à la place de compresseur.

La vitesse du fluide au niveau du diffuseur est importante, de telle sorte que les pertes par frottement le long de la paroi du diffuseur liées à la viscosité du fluide sont importantes. A ce niveau, la composante tangentielle de la vitesse du fluide est très importante et souvent prépondérante. L'invention vise à réduire ces pertes par frottement.

### Description de l'invention

Avec ces objectifs en vue, l'invention a pour objet un compresseur centrifuge de gaz ou une pompe comportant un corps, une roue montée rotative dans le corps autour d'un axe de roue, la roue comportant un moyeu, un ensemble de pales fixées sur le moyeu, le corps comportant un diffuseur placé en périphérie de la roue et une entrée de fluide placée en regard du moyeu, les pales comportant un premier bord en regard de l'ouverture axiale et un deuxième bord en regard du diffuseur pour qu'un fluide circule de l'entrée au diffuseur, les deuxièmes bords étant situés à l'intérieur d'un cylindre enveloppe de pale centré sur l'axe de roue, caractérisé en ce que la roue comporte au moins une couronne fixée à la roue et qui s'étend radialement au-delà du cylindre enveloppe de pale pour former une paroi du diffuseur.

Grâce à la couronne, la zone du diffuseur comporte une paroi qui tourne à la même vitesse que celle de la roue. La différence entre la vitesse moyenne du fluide et cette paroi est fortement diminuée, ce qui permet d'abaisser fortement les pertes par frottement à ce niveau. On obtient ainsi moins de pertes sur l'énergie cinétique du fluide dans le diffuseur et, par suite, sur l'énergie fournie sous forme de pression à la sortie de la volute. On constate également que la roue est soumise à des forces de pression dont la résultante est une force axiale. En particulier, la pression qui règne sur la face de la roue qui porte les pales est en général très différente de celle qui y est opposée. La modification de la taille de cette face qui résulte de l'ajout de la couronne au-delà du premier bord des pales modifie aussi cette résultante. Il est ainsi possible d'ajuster cette résultante, en particulier dans le cas d'un turbocompresseur dans lequel la roue de la turbine et la roue du compresseur exercent des forces axiales dans des sens opposés.

De manière particulière, la couronne est insérée avec du jeu dans un alésage du corps de compresseur et est placée de telle sorte que sa face côté diffuseur soit dans le même plan que la paroi de la volute à ce niveau. Le flux de gaz qui quitte la couronne continue à être guidé sans discontinuité par la paroi de la volute, évitant ainsi la création de pertes de charge.

Selon une caractéristique complémentaire, le corps comporte une volute autour du diffuseur.

Selon un mode de réalisation, la couronne est dans le prolongement du moyeu.

Dans un mode de réalisation particulier, la roue comporte un carénage fixé sur les pales. Selon un perfectionnement, la couronne est dans le prolongement du carénage. Ainsi, la zone du diffuseur comporte une paroi éventuellement supplémentaire qui tourne à la même vitesse que celle de la roue. Cette couronne peut être seule. En combinaison avec la couronne en extension du moyeu, le flux du fluide est entièrement canalisé dans cette zone par des parois qui se déplacent sensiblement à la même vitesse que le flux du fluide, diminuant ainsi fortement les pertes par frottement. L'équilibrage des forces de pression peut s'exercer dans une direction opposée à celle de la configuration avec la couronne dans le prolongement du moyeu.

De manière particulière, le carénage et les pales sont d'un seul tenant.

Selon une autre disposition, la couronne est d'un seul tenant avec la roue dans le prolongement du moyeu. On assure ainsi une grande résistance mécanique à la roue. La réalisation demande peu de modifications de la technique de fabrication.

### Brève description des figures

L'invention sera mieux comprise et d'autres particularités et avantages apparaîtront à la lecture de la description qui va suivre, la description faisant référence aux dessins annexés parmi lesquels :
- la figure 1 est une vue en coupe longitudinale d'une machine faisant fonction de compresseur conforme à un premier mode de réalisation de l'invention ;
- la figure 2 est une vue du détail II de la figure 1 ;
- la figure 3 est une vue en coupe longitudinale d'un turbocompresseur comportant une turbine et un compresseur conforme à l'invention ;
- les figures 4 et 5 sont des vues similaires à la figure 2 d'une roue de compresseur selon un troisième et un quatrième mode de réalisation de l'invention ;
- la figure 6 est une vue en coupe longitudinale selon la ligne VI-VI de la figure 7 d'un compresseur centrifuge selon l'art antérieur ;
- la figure 7 est une vue du compresseur, le corps étant vu en coupe selon la ligne VII-VII de la figure 6.

### DESCRIPTION DETAILLEE

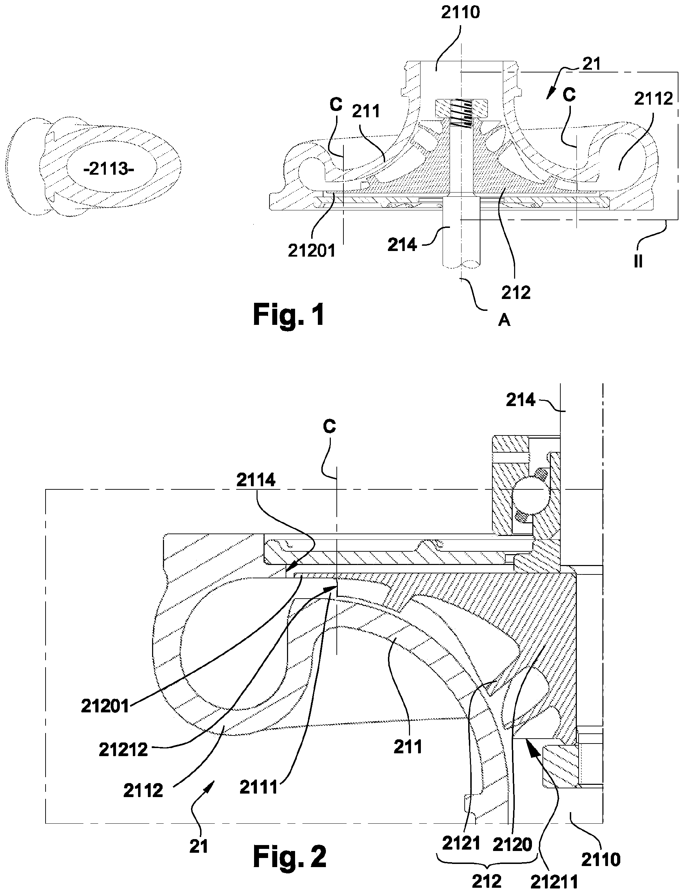

Un compresseur 21 conforme à un premier mode de réalisation de l'invention, tel que montré sur les figures 1 et 2, comporte un corps de compresseur 211 et une partie tournante montée rotative dans le corps de compresseur 211 autour d'un axe de roue A. La partie tournante comporte une roue de compresseur 212 montée sur un arbre rotatif 214 sur un palier du corps de compresseur 211. La roue de compresseur 212 comporte un moyeu 2120 et un ensemble de pales 2121 fixées sur le moyeu 2120 . Le corps de compresseur 211 comporte en outre une ouverture axiale placée en regard du moyeu 2120 et qui constitue une conduite d'entrée 2110. Le corps de compresseur 211 comporte une volute 2112 autour de la roue de compresseur 212. La volute 2112 comporte une ouverture périphérique formant un diffuseur 2111, placée en périphérie de la roue de compresseur 212, et débouche par une conduite de sortie 2113 qui s'étend sensiblement dans une direction tangentielle à la roue de compresseur 212. Les pales 2121 comportent un premier bord 21211 en regard de l'entrée des gaz et un deuxième bord 21212 en regard du diffuseur 2111. Les gaz circulent de l'entrée 2110 vers le diffuseur 2111 en étant entraînés par la roue de compresseur 212. La géométrie des pales 2121 est étudiée pour que les gaz s'accélèrent en traversant la roue de compresseur 212 à l'aide de l'énergie fournie par la roue. Les deuxièmes bords 21212 s'étendent sensiblement parallèlement à l'axe de roue A et sont contenus dans un cylindre fictif nommé cylindre enveloppe de pale C.

Conformément à l'invention, le moyeu 2120 s'étend au-delà du cylindre fictif C sous la forme d'une couronne 21201. La couronne 21201 délimite ainsi le diffuseur 2111 sur l'un de ses flancs. La couronne 21201 est insérée avec du jeu dans un alésage 2114 du corps de compresseur 211 et est placée de telle sorte que sa face côté diffuseur 2111 soit dans le même plan que la paroi de la volute 2112 à ce niveau.

En fonctionnement, l'arbre 214 est entraîné en rotation par des moyens d'entraînement, non représentés, à une vitesse pouvant être supérieure à 200 000 tours par minute. Un flux de gaz s'établit entre l'entrée de gaz 2110 et la sortie 2113. La vitesse du gaz à la sortie de la roue, au niveau du deuxième bord des pales a une composante tangentielle en général supérieure à la composante radiale. La vitesse relative entre la couronne et le flux de gaz est essentiellement la composante radiale et est donc bien plus faible que la vitesse du flux de gaz contre la paroi fixe du diffuseur selon l'art antérieur. On constate que les pertes liées aux frottements le long de la paroi rendue tournante sont sensiblement divisées par deux par rapport au cas de la paroi fixe, voire plus dans certains modes de fonctionnement où la vitesse de gaz est à dominante tangentielle.

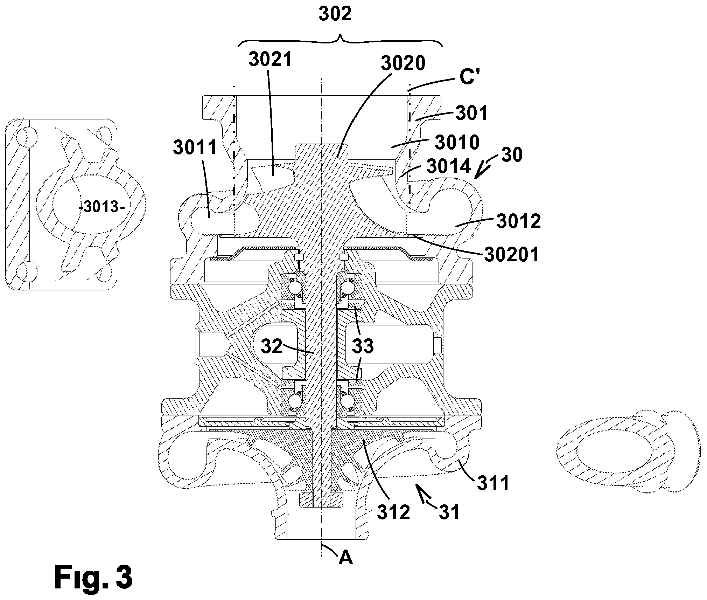

Dans le mode de réalisation montré sur la figure 3, un turbocompresseur comporte une turbine 30 et un compresseur 31 conforme à l'invention. Les roues 302, 312 de la turbine 30 et du compresseur 31 sont montés sur le même arbre 32, lequel est monté rotatif par l'intermédiaire d'un palier 33 placé entre le corps du compresseur 311 et celui de la turbine 301. Le palier 33 est formé dans cet exemple par deux roulements à billes.

La turbine 30 comporte un corps de turbine 301 et une partie tournante montée rotative sur le corps de turbine 301 autour de l'axe de roue A. La partie tournante comporte une roue de turbine 302 qui comporte un moyeu 3020 et un ensemble de pales 3021 fixées sur le moyeu 3020. Le corps de turbine 301 comporte une volute de turbine 3012 autour de la roue de turbine 302. La volute 3012 comporte une conduite d'entrée 3013 qui s'étend sensiblement dans une direction tangentielle et débouche par un convergent 3011 placé en périphérie de la roue de turbine 302. Le corps de turbine 301 comporte en outre une ouverture axiale placée en regard du moyeu 3020 et qui sert de sortie 3010 pour les gaz. Le corps de turbine 301 comporte une paroi de guidage 3014 en regard des pales 3021 de la roue de turbine 302 de manière à ne laisser qu'un faible espace entre les pales 3021 et le corps de turbine 301. Le convergent 3011 sert à canaliser les gaz qui entrent par la conduite d'entrée 3013 dans la volute de turbine 3012 pour qu'ils soient dirigés vers les pales 3021 de la roue de turbine 302 avec une direction et une vitesse adéquates. La géométrie des pales 3021 est étudiée pour que les gaz se détendent en traversant la roue de turbine 302 et restituent de l'énergie à celle-ci.

De la même manière que pour le compresseur 31, la roue de turbine 302 comporte une couronne 30201 dans le prolongement du moyeu 3020 au-delà du cylindre enveloppe de pale C'. La couronne 30201 forme l'une des parois du convergent 3011.

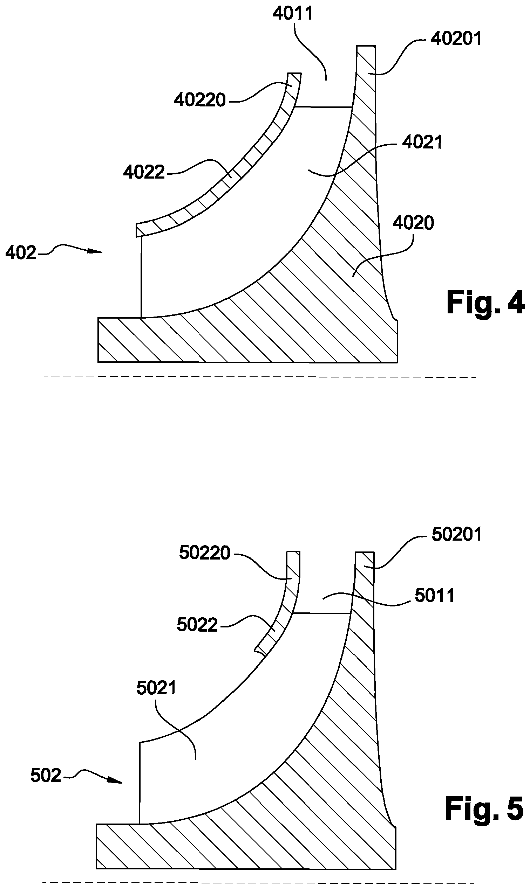

Selon un troisième mode de réalisation, montré sur la figure 4, la roue 402 d'un compresseur comporte en outre un carénage 4022 fixé sur les pales 4021 et canalisant les gaz entre le carénage et le moyeu 4020, selon une technique connue en soi. Le carénage 4022 est d'un seul tenant avec les pales 4021, mais il pourrait être fixé par d'autres moyens. Conformément à l'invention, le carénage se prolonge par une deuxième couronne 40220, en vis-à-vis à la couronne 40201 qui prolonge le moyeu. Ainsi, le diffuseur 4011 comporte deux parois qui le délimitent et qui sont rotatives afin de limiter les pertes par frottement.

Selon un quatrième mode de réalisation, montré sur la figure 5, la roue 502 d'un compresseur comporte également un carénage fixé 5022 sur les pales 5021, mais uniquement dans la partie la plus périphérique de la roue 502. Le carénage 5022 est d'un seul tenant avec les pales 5021, mais il pourrait être fixé par d'autres moyens. Conformément à l'invention, le carénage se prolonge par une deuxième couronne 50220, sensiblement parallèle à la couronne 50201 qui prolonge le moyeu. Ainsi, le diffuseur 5011 comporte deux parois qui le délimitent et qui sont rotatives afin de limiter les pertes par frottement.

L'invention n'est pas limitée aux modes de réalisation qui viennent d'être décrits uniquement à titre d'exemple. La couronne pourrait n'équiper que le carénage. Les machines peuvent faire circuler un liquide à la place d'un fluide gazeux.

## Revendications

1. Compresseur centrifuge de gaz ou pompe comportant un corps (211), une roue (212) montée rotative dans le corps (211) autour d'un axe de roue (A), la roue (212) comportant un moyeu (2120), un ensemble de pales (2121) fixées sur le moyeu (2120), le corps (211) comportant un diffuseur (2111) placé en périphérie de la roue (212) et une entrée (2110) de fluide placée en regard du moyeu (2120), les pales (2121) comportant un premier bord (21211) en regard de l'entrée (2110) et un deuxième bord (21212) en regard du diffuseur (2111) pour qu'un fluide circule de l'entrée au diffuseur, les deuxièmes bords (21212) étant situés à l'intérieur d'un cylindre enveloppe de pale (C) centré sur l'axe de roue (A),
- la roue (212; 402 ; 502) comportant au moins une couronne (21201 ; 40221 ; 50221) fixée à la roue et qui s'étend radialement au-delà du cylindre enveloppe de pale (C) pour former une paroi du diffuseur (2111 ; 4011 ; 5011);
- le corps (211) comportant une volute (2112) autour du diffuseur (2111) ; **caractérisée en ce que**,
- la couronne est insérée avec du jeu dans un alésage (2114) du corps de compresseur (211) et est placée de telle sorte que sa face côté diffuseur (2111) soit dans le même plan que la paroi de la volute (2112) à ce niveau.

2. Compresseur ou pompe selon la revendication 1, dans laquelle la couronne (21201) est dans le prolongement du moyeu (2120).

3. Compresseur ou pompe selon la revendication 1 ou la revendication 2, dans laquelle la roue (402, 502) comporte un carénage (4022, 5022) fixé sur les pales (4021, 5021).

4. Compresseur ou pompe selon la revendication 3, dans laquelle une deuxième couronne (40220, 50220) est dans le prolongement du carénage (4022, 5022).

5. Compresseur ou pompe selon la revendication 2 ou selon la revendication 3, dans laquelle le carénage (4022, 5022) et les pales (4021, 5021) sont d'un seul tenant.

6. Compresseur ou pompe selon l'une des revendications 2 à 5, dans laquelle la couronne (21201, 40201, 50201, 50220) est d'un seul tenant avec la roue dans le prolongement du moyeu (2120, 4020).

## Patentansprüche

1. Gaskreiselverdichter oder Pumpe, umfassend einen Körper (211), ein Rad (212), das um eine Radachse (A) drehend im Körper (211) montiert ist, wobei das Rad (212) eine Nabe (2120) umfasst, einen Satz Schaufeln (2121), die an der Nabe (2120) befestigt sind, wobei der Körper (211) einen Diffusor (2111) umfasst, der am Umfang des Rades (212) angeordnet ist, und einen Fluideinlass (2110), der der Nabe (2120) zugewandt angeordnet ist, wobei die Schaufeln (2121) einen ersten Rand (21211) umfassen, der dem Einlass (2110) zugewandt ist, und einen zweiten Rand (21212), der dem Diffusor (2111) zugewandt ist, sodass ein Fluid vom Einlass zum Diffusor zirkuliert, wobei die zweiten Ränder (21212) an der Innenseite eines Schaufelhüllzylinders (C) liegen, der auf der Radachse (A) zentriert ist,
- wobei das Rad (212; 402; 502) mindestens einen Kranz (21201; 40221; 50221) umfasst, der am Rad befestigt ist und der sich radial jenseits des Schaufelhüllzylinders (C) erstreckt, um eine Wand des Diffusors (2111; 4011; 5011) zu bilden;
- wobei der Körper (211) eine Schnecke (2112) um den Diffusor (2111) herum umfasst;
**dadurch gekennzeichnet, dass**
- der Kranz mit Spiel in einer Bohrung (2114) des Verdichterkörpers (211) eingesetzt ist und derart angeordnet ist, dass seine diffusorseitige Fläche (2111) in derselben Ebene liegt wie die Wand der Schnecke (2112) in diesem Bereich.

2. Verdichter oder Pumpe nach Anspruch 1, wobei der Kranz (21201) in der Verlängerung der Nabe (2120) liegt.

3. Verdichter oder Pumpe nach Anspruch 1 oder Anspruch 2, wobei das Rad (402, 502) eine Verkleidung (4022, 5022) umfasst, die an den Schaufeln (4021, 5021) befestigt ist.

4. Verdichter oder Pumpe nach Anspruch 3, wobei ein zweiter Kranz (40220, 50220) in der Verlängerung der Verkleidung (4022, 5022) liegt.

5. Verdichter oder Pumpe nach Anspruch 2 oder Anspruch 3, wobei die Verkleidung (4022, 5022) und die Schaufeln (4021, 5021) einstückig sind.

6. Verdichter oder Pumpe nach einem der Ansprüche 2 bis 5, wobei der Kranz (21201, 40201, 50201, 50220) mit dem Rad in der Verlängerung der Nabe (2120, 4020) einstückig ist.

## Claims

1. Centrifugal gas compressor or pump comprising a body (211), a wheel (212) rotatively mounted in the body (211) around a wheel axis (A), the wheel (212) comprising a hub (2120), a set of blades (2121) attached to the hub (2120), the body (211) comprising a diffuser (2111) placed on the periphery of the wheel (212) and a fluid intake (2110) placed opposite the hub (2120), the blades (2121) comprising a first edge (21211) opposite the intake (2110) and a second edge (21212) opposite the diffuser (2111) so that a fluid circulates from the intake to the diffuser, the second edges (21212) being located inside a blade-enveloping cylinder (C) centred on the wheel axis (A),
- the wheel (212; 402; 502) comprising at least one ring (21201, 40221, 50221), attached to the wheel and which extends radially beyond the blade-enveloping cylinder (C) to form a wall of the diffuser (2111; 4011; 5011);
- the body (211) comprising a volute (2112) around the diffuser (2111); **characterised in that**
- the ring is inserted with play into a bore (2114) of the compressor body (211) and is placed in such a way that its diffuser (2111) side face is in the same plane as the wall of the volute (2112) at this level.

2. Compressor or pump according to claim 1, wherein the ring (21201) extends from the hub (2120).

3. Compressor or pump according to claim 1 or claim 2, wherein the wheel (402, 502) comprises a cowl (4022, 5022) attached to the blades (4021, 5021).

4. Compressor or pump according to claim 3, wherein a second ring (40220, 50220) extends from the cowl (4022, 5022).

5. Compressor or pump according to claim 2 or claim 3, wherein the cowl (4022, 5022) and the blades (4021, 5021) are in one piece.

6. Compressor or pump according to one of the claims 2 to 5, wherein the ring (21201, 40201, 50201, 50220) forms one piece with the wheel extending from the hub (2120, 4020).
